# EUROPEAN PATENT SPECIFICATION

(11) **EP 3 505 324 B1**
(45) Date of publication and mention of the grant of the patent: **11.08.2021**
(21) Application number: 18213461.9
(22) Date of filing: 18.12.2018
(51) Int. Cl.: B29C 45/14, B29L 31/00

(54) **A MOLD FOR OVERMOLDING POLYMER ONTO A PANE MODULE FOR WINDOWS AND A METHOD OF OPERATING SAID MOLD**
FORM ZUM UMSPRITZEN VON POLYMER AUF EIN SCHEIBENMODUL FÜR FENSTER UND EIN VERFAHREN ZUM BETREIBEN DIESER FORM
MOULE POUR SURMOULER UN POLYMÈRE SUR UN MODULE DE VITRE ET PROCÉDÉ DE FONCTIONNEMENT DUDIT MOULE

(30) Priority: 27.12.2017 DK PA201771028
(43) Date of publication of application: 03.07.2019
(73) Proprietor: VKR Holding A/S, 2970 Hørsholm (DK)
(72) Inventor: Klausen, Lars, 2970 Hørsholm (DK); Blichfeldt, Asbjørn Skyum, 2970 Hørsholm (DK)
(74) Representative: AWA Denmark A/S

(56) References cited:
- EP-A1- 2 801 466
- WO-A1-2009/018827
- WO-A1-2018/098586
- JP-A- H02 249 616

## Description

### Field of the invention

The invention relates to manufacturing of pane modules to be installed in a window frame or sash. Specifically, the invention relates to overmolding of polymer onto a pane element, a mold for such overmolding, and a method of operating said mold.

### Background of the invention

When glazing vertical windows as well as roof windows the pane element is usually connected to a glass-carrying frame, i.e. traditionally the sash, by means of glazing profiles fastened to the frame by means of screws. The pane element is kept in place by means of glass spacers and glazing clips. Though it has proven very efficient, this method suffers from a number of disadvantages, among others the large number of different parts needed for the glazing, and the fact that the discontinuous support may cause potentially destructive strains on the pane element, particularly when using a conventional glass sheet pane element. This influences the lifespan of the pane element with respect to breakage and failure in the pane sealing, the latter resulting in the formation of condensation in the space between the sheet elements.

More recently, attempts have been made to provide the pane element with a molded border element, thereby forming a pane module, and attaching the border element to the frame. A pane module of this type, which is known from WO2010/088904, allows a greater flexibility in the production of windows, as fewer parts are needed, and the molded border element provides a continuous support along the entire edge of the pane element, thereby allowing a much higher degree of freedom in designing the sash and/or frame members. Certain functions previously associated with the sash and/or frame members, such as load bearing, may be wholly or partially taken over by the border element and a great variety of window products may be achieved by combining different pane modules and different sash and/or frame members in different ways. For example, PCT/DK2008/050186 relates to a method for making a pane module adapted to be installed in a window frame and comprising a pane element, which includes a first sheet element intended to face the exterior and a second sheet element intended to face the interior of a building in the mounted state, said sheet elements, such as sheets of glass, being separated by one or more spacer members.

A similar solution to the problem of securing a pane element without using traditional parts has been provided in EP0384462.

EP2801466 relates to overmolding and/or encapsulating a glass sheet by means of polymeric material whereas actuators are used to adjust the mold in order to compensate variations in thickness and planarity of the glass sheet.

However, overmolding of polymer onto a pane module is not easy. The pane element is made in a separate process producing pane elements of slightly varying dimensions and geometry. For example, the thickness of a multi-layer pane element may vary slightly between different production batches of pane elements. Further, the glass is not always perfectly planar. Altogether, these variations sometimes cause formation of flash where the border element meets glass. This is not acceptable on windows since the flash may be visible in normal use of the window and hence requires post-processing for removal of flash or, even worse, discarding of the pane modules affected by flash.

### Summary of the invention

Hence, an object of the invention is to mitigate the formation of flash in conjunction with production of pane modules comprising a polymer border element molded onto a pane element.

This and other objects are achieved by an injection mold according to a first aspect of the invention, and a method of operating the mold according to a second aspect of the invention.

The injection mold comprises a first and a second mold part together defining a space, said space being suitable for receiving a pane element. Further, the first mold part comprises support means for defining a predetermined position of the pane element within the space. Also, the second mold part comprises a pressure plate movable within said space for pressing the pane element against the first mold part and for delimiting a cavity for receiving injected polymer thereby defining the shape of a portion of a border element to be molded onto a circumferential portion of the pane element. One or more primary actuators are operatively connected to the pressure plate for controlling the position of the pressure plate within the space. Molding of the border element onto a circumferential portion of the pane element is enabled by placing the pane element in the space. This type of molding onto a component already present in the mold is sometimes referred to as overmolding. Before injection of polymer into the mold, the primary actuators are operated to push the pressure plate against the glass of the pane element such that the pressure plate limits the cavity and seals against the glass with suitable pressure. The movability of the pressure plate enables slight variations in thickness of the pane element, thereby allowing for less strict production tolerances of the pane elements.

The pressure plate further comprises a circumferential plate portion for pressing a circumferential portion of the pane element against the first mold part,wherein a plurality of secondary actuators are operatively connected to respective attachment portions of the circumferential plate portion of the pressure plate for controlling the position of each respective attachment portion within said space. By moving each respective primary and secondary actuator differently, the pressure plate can be controllably deformed to desired shape, such as planar, non-planar or slightly dome shaped/concave/convex/double curved. Within the context of this disclosure, a dome shape is a double curved shape. Further, a concave or convex shape of the pressure plate is a shape having a concave or convex cross-section. This allows the injection mold to be used for a greater range of pane elements of varying thicknesses and/or varying curvature. Movements by the primary actuator(s) is thus controlled independently of movements made by the secondary actuators to deform the pressure plate.

The pressure plate may comprise a circumferential plate portion for pressing a circumferential portion of the pane element against the first mold part. Also, the circumferential plate portion is substantially rectangular thus comprising two opposing pairs of elongate portions. Further, the injection mold comprises one or more secondary actuators configured for bending each respective elongate portion. By bending the elongate portions, it is possible to make the pressure plate better conform to varying curvature of the pane element and thereby better seal such that flash is mitigated.

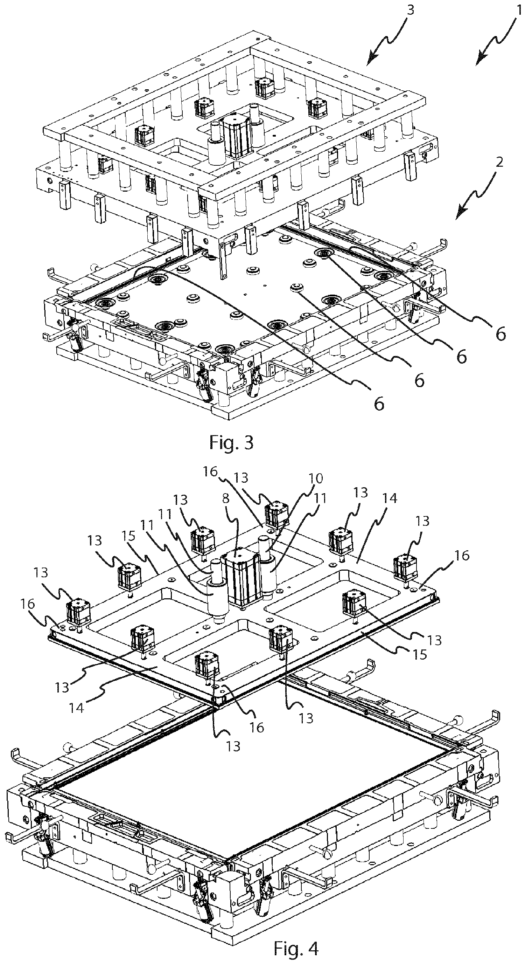

The circumferential plate portion may be substantially rectangular comprising two opposite pairs of elongate portions merging at respective corner portions. Each corner portion is operatively connected to one or more secondary actuators configured to control the position of the respective corner portions of the pressure plate. Further, a respective central portion of each elongate portion is operatively connected to at least one primary actuator for controlling the position of each respective central portion. By adjusting the positions of the corner portions relative to the central portions each elongate portion of the circumferential plate portion can be bent such that the rectangular portions conforms to a convex or concave pane element. The primary actuator controls the respective central portions independently of the corner portions. As shown in Fig. 4, the central portion is not a mid-point of each longitudinal portion, but rather a wider portion extending far enough from adjacent corner portions 16 to allow the primary 8 and secondary 13 actuators to deform the respective longitudinal portion 14, 15 relatively adjacent corner portions 16. Another word for central portion is 'intermediate portion', i.e. a portion between corner portions 16.

The opposite pairs of central portions may be connected by means of a cross-bar, said cross-bar being operatively connected to the at least one primary actuator such that movement of the cross bar controls movement of the connected central portions. Such a configuration thus allows for the connected central portions to be jointly moved thereby providing for symmetrical deformation of the circumferential plate portion. Further, the cross-bar allows for only one actuator to be used to control both central portions.

Both opposite pairs of central portions may be connected by means of a rigid structure operatively connected to the at least one primary actuator such that movement of the rigid structure jointly controls movement of the four connected central portions. Such a configuration thus allows for the four connected central portions to be jointly moved thereby providing for symmetrical deformation of the circumferential plate portion. Further, the rigid structure allows for only one primary actuator to be used to control all four central portions.

The rigid structure may comprise a cross-shaped load distribution member. The cross-shaped load distribution member efficiently distributes forces needed to move the central portions, whilst keeping weight low.

Further, the cross-bar or rigid cross-shaped structure may be integrally formed with the pressure plate. The cross-bar or cross-shaped structure may be integrally formed with the pressure plate, for example by machining a plate of uniform thickness to remove material around the cross-bar or cross-shaped structure. Material may for example be removed by milling, laser cutting or water jetting. By keeping the cross-bar or cross-shaped structure integrated with the pressure plate, a robust pressure plate is achieved at low cost.

At least some of the actuators may be hydraulic cylinders provided with pressure sensors for sensing pressure applied in each cylinder. The provision of hydraulic cylinders and pressure sensors enables improved control of pressure applied to the various portions and corners of the pressure plate.

The circumferential portion of the pressure plate may be provided with a resilient gasket for sealing against glass of the pane element. The resilient gasket seals well to the glass of the pane element. And distributes applied pressure over a well-defined area limited to the area of the deformed gasket. Thus it is easier to determine sealing pressure based on applied force by respective actuators.

As mentioned above, the second aspect of the invention relates to a method of producing a window pane module using an injection mold according to the first aspect above. The method comprises the steps of:
opening the injection mold,
positioning a pane element against the support means in the space formed between the first and second mold parts,
operating at least some of said primary and secondary actuators to move the pressure plate to a position increasing available space for the pane element,
closing the mold,
operating at least some of said actuators to adjust the shape of the pressure plate,
operating the actuator(s) to press the pressure plate against the pane element, and
injecting polymer into the cavity of the mold to form the border element.
By adjusting the shape of the pressure plate the injection mold is suitable for a range of element panes or varying thickness and curvatures. This in turn improves sealing between injection mold and pane element such that formation of flash is mitigated.

The method may comprise measuring the pressure applied by the respective actuators whilst moving the actuators to bring the respective measured pressure to a respective predetermined threshold value. By studying the pressure applied it is possible to apply a suitable pressure to each portion of the circumferential portion of the pane element, thereby promoting better control of sealing between pressure plate and pane element. For example, if relatively little pressure is required to deform the pressure plate, the measured pressure is mainly dependent on resistance to deformation from the pane element, wherein a suitable pressure can be applied evenly around the pane element.

Further, the threshold values are based on reference data related to the pressure plate's inherent resistance to deformation. When the resistance to deformation of the pressure plate is non-negligible in relation to desired surface pressure on the pane element by the pressure plate, prior study of the inherent resistance to deformation of the pressure plate is helpful. IT can then be derived how much of added pressure by the actuators is absorbed by the deformation of the pressure plate and thus how much of applied pressure by the actuators is absorbed by the pane element. Proper sealing between pane element and pressure plate can thus be effected without cracking the pane element.

### Brief description of drawings

The invention will now be described in more detail with reference to non-limiting embodiments shown in the schematic drawing, in which:
Fig. 1 is an exploded perspective view of an injection mold according to a first embodiment of the invention;
Fig. 2 is a perspective view showing the pressure plate fitted in the second mold part;
Fig. 3 is a perspective view showing the top of the second pressure plate, and the support means of the first pressure plate;
Fig. 4 is a perspective view showing the first mold part with a pane element positioned for overmolding and showing the second mold part with some parts hidden such that the primary and secondary actuators are shown connected to the pressure plate 7;

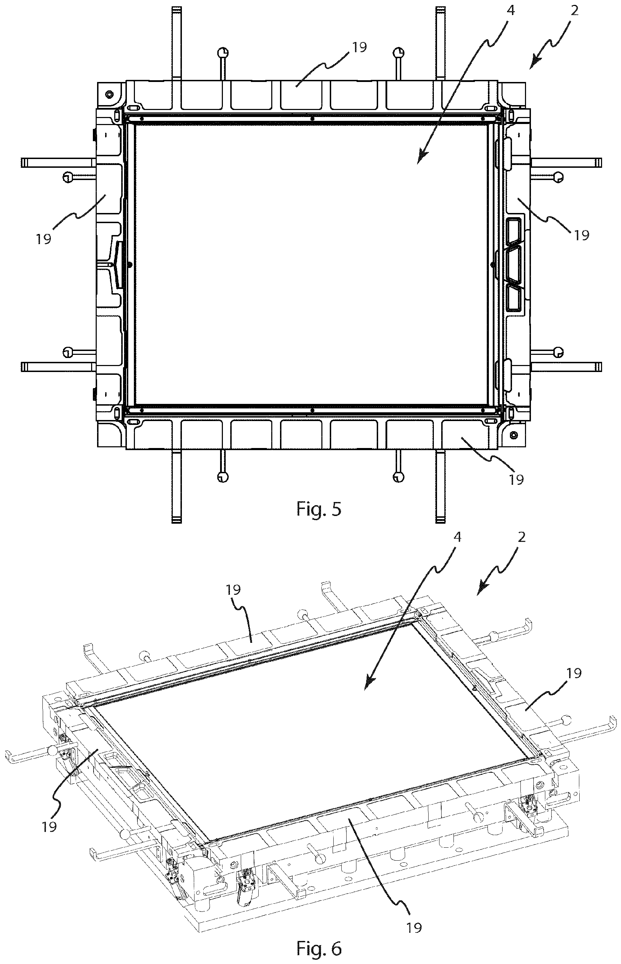

Fig. 5 is a top view of the first mold part with a pane element positioned for overmolding; and
Fig. 6 is a perspective view from above showing the first mold part with a pane element also shown in Fig. 5.

**List of reference numbers**

| | | | |
|---|---|---|---|
| 1 | injection mold | 11 | bushings |
| 2 | first mold part | 12 | circumferential plate portion (of pressure plate) |
| 3 | second mold part | 13 | secondary actuators |
| 4 | pane element | 14 | pair of longitudinal portions |
| 5 | border element | 15 | pair of longitudinal portions |
| 6 | support means | 16 | corner portion |
| 7 | pressure plate | 17 | central portion |
| 8 | primary actuator(s) | 18 | window pane module |
| 9 | longitudinal axis | 19 | side cores of first mold part |
| 10 | guide shafts | 20 | window pane module |

### Detailed description of the invention

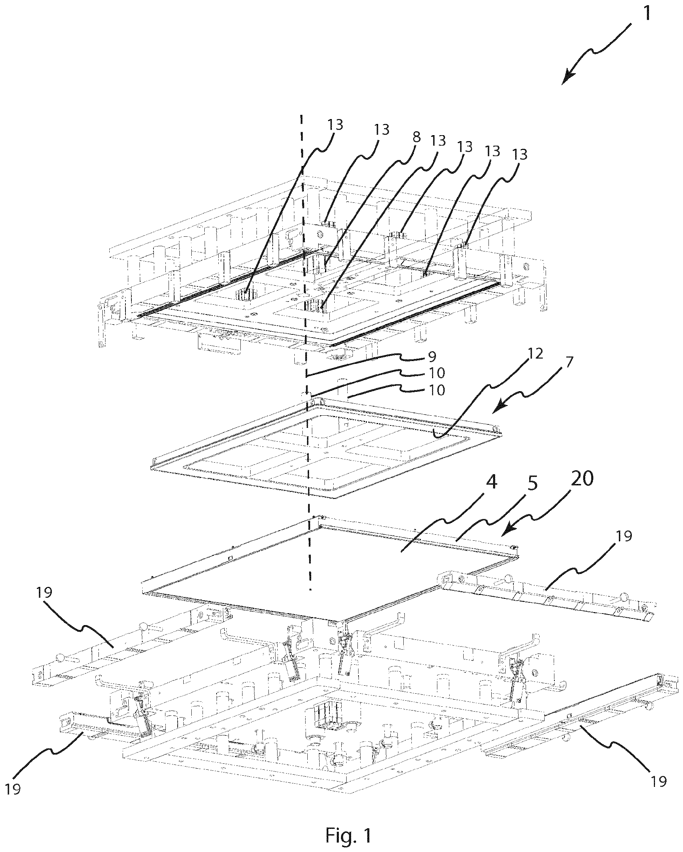

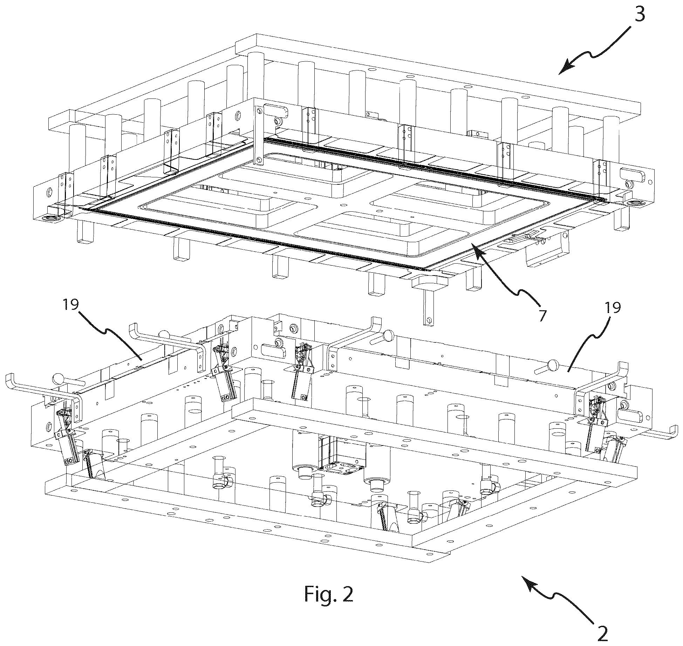

An injection mold 1 according to a first embodiment of the invention is shown in Figs. 1-4. The injection mold 1 comprises a first 2 and a second 3 mold part together defining a space for receiving a pane element 4 in a position for overmolding of a border element 5 surrounding a circumferential portion of the pane element 4. Further, the first mold part 2 comprises support means 6 for defining a predetermined position of the pane element 4 within the space. The support means 6 comprises a circumferential ridge and a number of ball supports and suction cups connected to a pneumatic system for optionally holding a pane element to the first mold part. In other embodiments, the support means may have some other suitable configuration. Further, the second mold part 3 comprises a pressure plate 7 movable within said space for pressing the pane element 4 against the first mold part 2 and for delimiting a cavity for receiving injected polymer thereby defining the shape of a portion of the border element 5. A primary actuator 8 is operatively connected to the pressure plate 7 for controlling the position of the pressure plate 7 within the space, although several primary actuators 8 could be used instead. The pressure plate 7 is guided relatively the second mold part 3 for movement along a longitudinal axis 9 normal to the parting plane between the first 2 and second 3 mold parts or the pane element 4 (see fig. 1). The pressure plate 7 is guided by two guide shafts 10 slidably supported in corresponding bushings 11 in the second mold part 3 (see figs. 1, 3 and 4), although any other suitable guide means could be used instead. In this embodiment, the primary actuator 8 controlling movement of the pressure plate 7 is attached to the outside of the second mold part 3 with a movable shaft extending through a hole in the second mold part 3 to the pressure plate 7 to which the movable shaft of the primary actutor 8 is attached. However, any other suitable arrangement for achieving controlled movement of the pressure plate 7 along the longitudinal axis 9 by means of actuators could be used instead.

The pressure plate 7 comprises a circumferential plate portion 12 for pressing a circumferential portion of the pane element 4 against the first mold part 2. A plurality of secondary actuators 13 are operatively connected to respective attachment portions of the circumferential plate portion 12 of the pressure plate 7 for controlling the position of each respective attachment portion within said space (see fig. 4 in which the second mold part is hidden in order to better show the actuators 13 for controlling deformation of the pressure plate). The position of each attachment portion is varied substantially along the longitudinal axis 9 (i.e. parallell to the longitudinal axis 9).

Since, windows are often rectangular, the circumferential plate portion 12 is adapted accordingly by being substantially rectangular comprising two opposite pairs 14, 15 of elongate portions merging at respective corner portions 16. Each corner portion 16 is operatively connected to one or more secondary actuators 13 configured to control the position of the respective corner portions 16 of the pressure plate 7. Further, a respective central portion of each elongate portion 14, 15 is operatively connected to the primary actuator 8 for controlling the position of each respective central portion. Both opposite pairs of central portions 14, 15 are connected by means of a rigid structure operatively connected to the primary actuator 8 such that movement of the rigid structure jointly affects movement/rotation of the four connected central portions. For example, if all secondary actuators 13 of the disclosed embodiment are kept static at the same level whilst the primary actuator 8 is moved, the central- and corner portions will not move much, but will rotate or twist slightly to align with the deformed shape of the loaded rigid structure. Of course, all movements by the actuators are relative movements, such that a corresponding deformation could likewise be achieved by holding the primary actuator(s) static and instead moving the secondary actuators 13, or by relative mevements of both the primary 8 and secondary 13 actuators. Further, is should be understood that, for all embodiments of the invention, any primary and secondary actuators could be identical actuators and that the terminology primary and secondary is used merely for referencing them when describing their interrelationship. Hence, the primary and secondary actuators can be used, separately or together, for moving the pressure plate within the space and/or for deforming the pressure plate. The pressure plate 7 will then become slightly dome shaped, i.e. double curved,wherein its dome shape can be adapted should the shape of the pane element 4 be dome shaped/double curved before and/or during injection of polymer. Further adaptation of the shape of the pressure plate 7 can be done by operating the primary 8 or secondary 13 actuators. The rigid structure comprises a cross-shaped load distribution member integrally formed with the pressure plate 7. Each one of the four 'ends' of the cross-shaped structure merges with a respective one of the four central portions of the elongate portions. The primary 8 and secondary 13 actuators may by hydraulic cylinders. The hydraulic cylinders may be provided with with pressure sensors for sensing pressure applied in each cylinder. The circumferential portion 12 of the pressure plate may be provided with a resilient gasket (not illustrated) for sealing against glass of the pane element. The resilient gasket extends all around the circumferential portion of the pressure plate, on that side of the pressure plate which faces the pane element 4.The resilient gasket seals well to the glass of the pane element. And distributes applied pressure over a well-defined area limited to the area of the deformed gasket. Thus it is easier to determine sealing pressure based on applied force by respective actuators.

As mentioned above, the second aspect of the invention relates to a method of producing a window pane module 18 using an injection mold 1 according to the first aspect described above. The method comprises the steps of:
opening the injection mold 1,
positioning a pane element 4 against the support means 6 in the space formed between the first 2 and second 3 mold parts,
operating at least some of said actuators 8, 13 to move the pressure plate 7 to a position increasing available space for the pane element 4,
closing the mold 1,
operating at least some of said actuators 8, 13 to adjust the shape of the pressure plate 7,
operating the actuator(s) 8, 13 to force the pressure plate 7 against the pane element 4, and
injecting polymer into the cavity of the mold 1 to form the border element 5. Adjustment of the shape of the pressure plate 7 is made such that it fits the pane element 4 to apply an even pressure on the pane element 4 or seals against the pane element 4 to avoid formation of flash.

The skilled person will understand that any side cores 19 or other moving parts of the mold have to be moved in the correct order in order to correctly interact, guide interlock and open. For example, the four visible side cores 19 interact with the second mold part 3 and the first mold part 2 to jointly define the mold cavity shaping the border element 5. Depending on the requirements of the border element design, a smaller or larger number of side cores 19, or none at all, may be needed.

Further, adjustment of the shape of the pressure plate 7 may only be necessary for the first one(s) in a larger series of pane elements from the same production batch of pane elements, since pane elements from the same production batch tend to have the same thickness and shape. Thus, the first overmolding may exhibit flash, whereafter the pressure plate 7 can be adjusted accordingly and subsequently tested again with a new pane element. Thus, once flash starts forming, one has to adjust the shape of the pressure plate 7 to account for the flash formed. An alternative way of understanding what adjustment of the pressure plate is needed, is to 3d-scan the pane element 4 to be overmolded and then use the measurements to derive a suitable shape of the pressure plate 7, wherein the pressure plate 7 can be adjusted accordingly, either by knowledge of its force requirement for specific deformation, or by continuously/iteratively 3d-scanning the pressure plate 7 and subsequently adjusting the shape of the pressure plate 7 by operation of the actuators until the desired shape of the pressure plate 7 is achieved.

The method may comprise measuring the pressure applied by the respective actuators 8, 13 whilst moving the actuators 8, 13 to bring the respective measured pressure to a respective predetermined threshold value. The threshold values are based on reference data related to the pressure plate's inherent resistance to deformation. The reference data may be derived by deforming the pressure plate 7 gradually between a plurality of predetermined configurations, for example from relaxed planar to slightly positively or negatively dome shaped in a number of steps, each step corresponding to a configuration. For each configuration, the pressure sensed is recorded for each one of the primary and secondary actuators. It is subsequently possible to derive the pressure/force between the pane element and each respective corner portion or central portion of the pressure plate by studying the pressure sensed while moving the actuators and comparing it to the reference data. It is thus possible to move the pressure plate 7 gradually towards the pane element 4 until pressure increases at one or more of the actuators. The pressure is then allowed to increase to the predetermined threshold value but then the related actuator is adjusted to relieve or keep the pressure whilst the other actuators are operated to move the respective portions of the pressure plate closer to the pane element until the respective pressures of those actuators also increase to their respective threshold values. Alternatively, or additionaly, movements of the actuators may be limited to the predetermined configurations such that the pressure plate is first put in a first configuration and lowered to probe the shape of the pane element by sensing the pressure increases of the actuators, whereafter the pressure plate is slightly moved away from the pane element and its shape alterered to a second configuration, which is subsequently used for probing. By accordingly repeatedly probing, it is typically possible to find the configuration best matching the shape of the pane element 4, wherein pressure between pane element 4 and pressure plate 7 is evenly spread over the pressure plate 7 or its circumferential portion 12. Here, reference data is used to determine wether or not pressure is evenly spread, by comparing the measured pressure to the reference pressure fo the current configuration used.

## Claims

1. An injection mold (1) comprising a first (2) and a second (3) mold part together defining a space, said space being suitable for receiving a pane element (4),
wherein the first mold part (2) comprises support means (6) for defining a predetermined position of the pane element (4) within the space,
wherein the second mold part (3) comprises a pressure plate (7) movable within said space for pressing the pane element (4) against the first mold part (2) and for delimiting a cavity for receiving injected polymer thereby defining the shape of a portion of a border element (5) to be molded onto a circumferential portion of the pane element (4), **characterized in that** one or more primary actuators (8) are operatively connected to the pressure plate (7) for controlling the position of the pressure plate within the space,
wherein the pressure plate (7) comprises a circumferential plate portion (12) for pressing a circumferential portion of the pane element (4) against the first mold part (2),
wherein a plurality of secondary actuators (13) are operatively connected to respective attachment portions of the circumferential plate portion (12) of the pressure plate (7) for controlling the position of each respective attachment portion within said space, and
wherein the shape of the pressure plate (7) can be adjusted by operating one or more primary (8) or secondary (13) actuators.

2. An injection mold (1) according to claim 1, wherein the pressure plate (7) comprises a circumferential plate portion (12) for pressing a circumferential portion of the pane element (4) against the first mold part (2), wherein the circumferential plate portion (12) is substantially rectangular thus comprising two opposing pairs of elongate portions (14, 15), and wherein the injection mold (1) comprises one or more secondary actuators (13) configured for bending each respective elongate portion.

3. An injection mold (1) according to any one of claims 1-2, wherein the circumferential plate portion (12) is substantially rectangular comprising two opposite pairs of elongate portions (14, 15) merging at respective corner portions,
each corner portion being operatively connected to one or more secondary actuators (13) configured to control the position of the respective corner portions of the pressure plate (7), wherein a respective central portion of each elongate portion is operatively connected to at least one primary actuator (8) for controlling the position of each respective central portion.

4. An injection mold (1) according to claim 3, wherein opposite pairs of central portions (14, 15) are connected by means of a cross-bar, said cross-bar being operatively connected to the at least one primary actuator (8) such that movement of the cross bar controls movement of the connected central portions.

5. An injection mold (1) according to claim 4, wherein both opposite pairs of central portions (14, 15) are connected by means of a rigid structure operatively connected to the at least one primary actuator (8) such that movement of the rigid structure jointly controls movement of the four connected central portions.

6. An injection mold (1) according to claim 5, wherein the rigid structure comprises a cross-shaped load distribution member.

7. An injection mold (1) according to claim 5 or 6, wherein the cross-bar or rigid cross-shaped structure is integrally formed with the pressure plate (7).

8. An injection mold (1) according to any one of the preceding claims, wherein at least some of the primary (8) and secondary (13) actuators are hydraulic cylinders provided with pressure sensors for sensing pressure applied in each cylinder.

9. An injection mold (1) according to any one of the preceding claims, wherein the circumferential portion (12) of the pressure plate is provided with a resilient gasket for sealing against glass of the pane element.

10. An injection mold (1) according to any one of the preceding claims, wherein the pressure plate (7) is guided by two guide shafts (10) slidably supported in corresponding bushings (11) in the second mold part (3).

11. A method of producing a window pane module (20) using an injection mold (1)comprising a first (2) and a second (3) mold part together defining a space, said space being suitable for receiving a pane element (4),
wherein the first mold part (2) comprises support means (6) for defining a predetermined position of the pane element (4) within the space,
wherein the second mold part (3) comprises a pressure plate (7) movable within said space for pressing the pane element (4) against the first mold part (2) and for delimiting a cavity for receiving injected polymer thereby defining the shape of a portion of a border element (5) to be molded onto a circumferential portion of the pane element (4), and
wherein one or more primary actuators (8) are operatively connected to the pressure plate (7) for controlling the position of the pressure plate within the space,
said method comprises the steps of:
opening the injection mold,
positioning a pane element (4) against the support means (6) in the space formed between the first (2) and second (3) mold parts,
operating at least some of said primary (8) and secondary (13) actuators to move the pressure plate (7) to a position increasing available space for the pane element (4),
closing the mold (1),
operating at least some of said actuators (8, 13) to adjust the shape of the pressure plate (7),
operating the actuator(s) (8, 13) to force the pressure plate (7) against the pane element (4),
injecting polymer into the cavity of the mold (1) to form the border element (5).

12. A method according to claim 11, further comprising measuring the pressure applied by the respective actuators whilst moving the actuators to bring the respective measured pressures to a respective predetermined threshold value.

13. A method according to claim 12, wherein the threshold values are based on reference data related to the pressure plate's (7) inherent resistance to deformation.

## Patentansprüche

1. Spritzgussform (1), umfassend einen ersten (2) und einen zweiten (3) Formteil, die zusammen einen Raum definieren, wobei der Raum geeignet ist, ein Scheibenelement (4) aufzunehmen,
wobei der erste Formteil (2) eine Trägereinrichtung (6) zum Definieren einer vorbestimmten Position des Scheibenelements (4) innerhalb des Raums umfasst,
wobei der zweite Formteil (3) eine Andruckplatte (7) umfasst, die innerhalb des Raums beweglich ist, um das Scheibenelement (4) gegen den ersten Formteil (2) zu drücken und um einen Hohlraum zur Aufnahme von eingespritztem Polymer zu begrenzen, um dadurch die Form eines Teils eines Randelements (5) zu definieren, das auf einen umfangsseitigen Teil des Scheibenelements (4) geformt werden soll,
**dadurch gekennzeichnet, dass**
ein oder mehrere Primäraktoren (8) funktionsfähig mit der Andruckplatte (7) verbunden sind, um die Position der Andruckplatte innerhalb des Raums zu steuern,
wobei die Andruckplatte (7) einen umfangsseitigen Plattenteil (12) zum Drücken eines umfangsseitigen Teils des Scheibenelements (4) gegen den ersten Formteil (2) umfasst,
wobei eine Vielzahl von Sekundäraktoren (13) funktionsfähig mit entsprechenden Befestigungsteilen des umfangsseitigen Plattenteils (12) der Andruckplatte (7) zum Steuern der Position jedes entsprechenden Befestigungsteils innerhalb des Raums verbunden ist, und wobei die Form der Andruckplatte (7) durch Betätigen eines oder mehrerer Primär- (8) oder Sekundäraktoren (13) eingestellt werden kann.

2. Spritzgussform (1) gemäß Anspruch 1, wobei die Andruckplatte (7) einen umfangsseitigen Plattenteil (12) zum Drücken eines umfangsseitigen Teils des Scheibenelements (4) gegen den ersten Formteil (2) umfasst, wobei der umfangsseitige Plattenteil (12) im Wesentlichen rechteckig ist und daher zwei gegenüberliegende Paare von langgestreckten Teilen (14, 15) umfasst, und wobei die Spritzgussform (1) einen oder mehrere Sekundäraktoren (13) umfasst, die dafür gestaltet sind, jeden entsprechenden langgestreckten Teil zu biegen.

3. Spritzgussform (1) gemäß einem der Ansprüche 1-2,
wobei der umfangsseitige Plattenteil (12) im Wesentlichen rechteckig ist und zwei gegenüberliegende Paare von langgestreckten Teilen (14, 15) umfasst, die sich an entsprechenden Eckteilen vereinigen,
wobei jeder Eckteil funktionsfähig mit einem oder mehreren Sekundäraktoren (13) verbunden ist, die dafür gestaltet sind, die Position der entsprechenden Eckteile der Andruckplatte (7) zu steuern, wobei ein entsprechender mittlerer Teil jedes langgestreckten Teils funktionsfähig mit wenigstens einem Primäraktor (8) verbunden ist, um die Position jedes entsprechenden mittleren Teils zu steuern.

4. Spritzgussform (1) gemäß Anspruch 3, wobei gegenüberliegende Paare von mittleren Teilen (14, 15) mithilfe einer Querstange verbunden sind, wobei die Querstange funktionsfähig mit dem wenigstens einen Primäraktor (8) verbunden ist, so dass Bewegung der Querstange Bewegung der verbundenen mittleren Teile steuert.

5. Spritzgussform (1) gemäß Anspruch 4, wobei beide gegenüberliegenden Paare von mittleren Teilen (14, 15) mithilfe einer starren Struktur verbunden sind, die funktionsfähig mit dem wenigstens einen Primäraktor (8) verbunden ist, so dass Bewegung der starren Struktur Bewegung der vier verbundenen mittleren Teile gemeinsam steuert.

6. Spritzgussform (1) gemäß Anspruch 5, wobei die starre Struktur ein kreuzförmiges Lastverteilungselement umfasst.

7. Spritzgussform (1) gemäß Anspruch 5 oder 6, wobei die Querstange oder starre kreuzförmige Struktur integral mit der Andruckplatte (7) gebildet ist.

8. Spritzgussform (1) gemäß einem der vorstehenden Ansprüche, wobei wenigstens manche der Primär- (8) und Sekundäraktoren (13) Hydraulikzylinder sind, die mit Drucksensoren zum Erfassen von in jedem Zylinder anliegendem Druck ausgestattet sind.

9. Spritzgussform (1) gemäß einem der vorstehenden Ansprüche, wobei der umfangsseitige Teil (12) der Andruckplatte mit einer nachgiebigen Dichtung zum Abdichten gegen Glas des Scheibenelements versehen ist.

10. Spritzgussform (1) gemäß einem der vorstehenden Ansprüche, wobei die Andruckplatte (7) von zwei Führungsstangen (10) geführt wird, die verschiebbar in entsprechenden Buchsen (11) in dem zweiten Formteil (3) gelagert sind.

11. Verfahren zur Herstellung eines Fensterscheibenmoduls (20) unter Verwendung einer Spritzgussform (1), die einen ersten (2) und einen zweiten (3) Formteil umfasst, die zusammen einen Raum definieren, wobei der Raum geeignet ist, ein Scheibenelement (4) aufzunehmen,
wobei der erste Formteil (2) eine Trägereinrichtung (6) zum Definieren einer vorbestimmten Position des Scheibenelements (4) innerhalb des Raums umfasst,
wobei der zweite Formteil (3) eine Andruckplatte (7) umfasst, die innerhalb des Raums beweglich ist, um das Scheibenelement (4) gegen den ersten Formteil (2) zu drücken und um einen Hohlraum zur Aufnahme von eingespritztem Polymer zu begrenzen, um dadurch die Form eines Teils eines Randelements (5) zu definieren, das auf einen umfangsseitigen Teil des Scheibenelements (4) geformt werden soll, und
wobei ein oder mehrere Primäraktoren (8) funktionsfähig mit der Andruckplatte (7) verbunden sind, um die Position der Andruckplatte innerhalb des Raums zu steuern,
wobei das Verfahren die Schritte umfasst:
Öffnen der Spritzgussform,
Positionieren eines Scheibenelements (4) gegen die Trägereinrichtung (6) in dem zwischen dem ersten (2) und dem zweiten (3) Formteil gebildeten Raum,
Betätigen wenigstens mancher der Primär- (8) und Sekundäraktoren (13), um die Andruckplatte (7) in eine Position zu bewegen, die den verfügbaren Raum für das Scheibenelement (4) erhöht,
Schließen der Gussform (1),
Betätigen wenigstens mancher der Aktoren (8, 13), um die Form der Andruckplatte (7) einzustellen,
Betätigen des Aktors/der Aktoren (8, 13), um die Andruckplatte (7) gegen das Scheibenelement (4) zu drücken,
Einspritzen von Polymer in den Hohlraum der Gussform (1), um das Randelement (5) zu bilden.

12. Verfahren gemäß Anspruch 11, ferner umfassend Messen des von den entsprechenden Aktoren ausgeübten Drucks, während die Aktoren bewegt werden, um die entsprechenden gemessenen Drucke auf einen entsprechenden vorbestimmten Schwellenwert zu bringen.

13. Verfahren gemäß Anspruch 12, wobei die Schwellenwerte auf der Grundlage von Referenzdaten zu dem inhärenten Verformungswiderstand der Andruckplatte (7) stehen.

## Revendications

1. Moule à injection (1) comprenant une première (2) et une deuxième (3) partie de moule définissant ensemble un espace, ledit espace étant approprié pour recevoir un élément de vitre (4),
dans lequel la première partie de moule (2) comprend des moyens de support (6) pour définir une position prédéterminée de l'élément de vitre (4) à l'intérieur de l'espace,
dans lequel la deuxième partie de moule (3) comprend une plaque de pression (7) mobile à l'intérieur dudit espace pour presser l'élément de vitre (4) contre la première partie de moule (2) et pour délimiter une cavité destinée à recevoir un polymère injecté définissant ainsi la forme d'une portion d'un élément de cadre (5) devant être moulé sur une portion circonférentielle de l'élément de vitre (4),
**caractérisé en ce que**
un ou plusieurs actionneurs primaires (8) sont fonctionnellement reliés à la plaque de pression (7) pour contrôler la position de la plaque de pression à l'intérieur de l'espace,
dans lequel la plaque de pression (7) comprend une portion circonférentielle de plaque (12) destinée à presser une portion circonférentielle de l'élément de vitre (4) contre la première partie de moule (2),
dans lequel une pluralité d'actionneurs secondaires (13) sont fonctionnellement reliés à des portions de fixation respectives de la portion circonférentielle de plaque (12) de la plaque de pression (7) pour contrôler la position de chaque portion de fixation respective à l'intérieur dudit espace, et
dans lequel la forme de la plaque de pression (7) peut être ajustée en faisant fonctionner un ou plusieurs actionneurs primaires (8) ou secondaires (13).

2. Moule à injection (1) selon la revendication 1, dans lequel la plaque de pression (7) comprend une portion circonférentielle de plaque (12) destinée à presser une portion circonférentielle de l'élément de vitre (4) contre la première partie de moule (2),
dans lequel la portion circonférentielle de plaque (12) est sensiblement rectangulaire, comprenant ainsi deux paires opposées de portions allongées (14, 15), et
dans lequel le moule à injection (1) comprend un ou plusieurs actionneurs secondaires (13) configurés pour cintrer chaque portion allongée respective.

3. Moule à injection (1) selon l'une quelconque des revendications 1 et 2, dans lequel la portion circonférentielle de plaque (12) est sensiblement rectangulaire, comprenant deux paires opposées de portions allongées (14, 15) se rejoignant à des portions de coin respectives,
chaque portion de coin étant fonctionnellement reliée à un ou plusieurs actionneurs secondaires (13) configurés pour contrôler la position des portions de coin respectives de la plaque de pression (7), dans lequel une portion centrale respective de chaque portion allongée est fonctionnellement reliée à au moins un actionneur primaire (8) destiné à contrôler la position de chaque portion centrale respective.

4. Moule à injection (1) selon la revendication 3, dans lequel des paires opposées de portions centrales (14, 15) sont reliées au moyen d'une traverse, lesdites traverses étant fonctionnellement reliées à l'au moins un actionneur primaire (8) de telle sorte que le déplacement de la traverse contrôle le déplacement des portions centrales reliées.

5. Moule à injection (1) selon la revendication 4, dans lequel les deux paires opposées de portions centrales (14, 15) sont reliées au moyen d'une structure rigide fonctionnellement reliée à l'au moins un actionneur primaire (8) de telle sorte que le déplacement de la structure rigide contrôle conjointement le déplacement des quatre portions centrales reliées.

6. Moule à injection (1) selon la revendication 5, dans lequel la structure rigide comprend un élément de répartition de la charge en forme de croix.

7. Moule à injection (1) selon la revendication 5 ou 6, dans lequel la traverse ou structure rigide en forme de croix est formée d'une seule pièce avec la plaque de pression (7).

8. Moule à injection (1) selon l'une quelconque des revendications précédentes, dans lequel au moins certains des actionneurs primaires (8) et secondaires (13) sont des vérins hydrauliques pourvus de capteurs de pression destinés à détecter la pression appliquée dans chaque vérin.

9. Moule à injection (1) selon l'une quelconque des revendications précédentes, dans lequel la portion circonférentielle (12) de la plaque de pression est pourvue d'un joint d'étanchéité élastique pour le scellement contre le verre de l'élément de vitre.

10. Moule à injection (1) selon l'une quelconque des revendications précédentes, dans lequel la plaque de pression (7) est guidée par deux arbres de guidage (10) supportés avec faculté de glissement dans des traversées correspondantes (11) dans la deuxième partie de moule (3) .

11. Procédé de production d'un module de vitre de fenêtre (20) utilisant un moule à injection (1) comprenant une première (2) et une deuxième (3) partie de moule définissant ensemble un espace, ledit espace étant approprié pour recevoir un élément de vitre (4),
la première partie de moule (2) comprenant des moyens de support (6) pour définir une position prédéterminée de l'élément de vitre (4) à l'intérieur de l'espace,
la deuxième partie de moule (3) comprenant une plaque de pression (7) mobile à l'intérieur dudit espace pour presser l'élément de vitre (4) contre la première partie de moule (2) et pour délimiter une cavité destinée à recevoir un polymère injecté définissant ainsi la forme d'une portion d'un élément de cadre (5) devant être moulé sur une portion circonférentielle de l'élément de vitre (4), et
un ou plusieurs actionneurs primaires (8) étant fonctionnellement reliés à la plaque de pression (7) pour contrôler la position de la plaque de pression à l'intérieur de l'espace,
ledit procédé comprenant les étapes suivantes :
ouverture du moule à injection,
positionnement d'un élément de vitre (4) contre les moyens de support (6) dans l'espace formé entre les première (2) et deuxième (3) parties de moule,
fonctionnement d'au moins certains desdits actionneurs primaires (8) et secondaires (13) pour déplacer la plaque de pression (7) jusqu'à une position augmentant l'espace disponible pour l'élément de vitre (4),
fermeture du moule (1),
fonctionnement d'au moins certains desdits actionneurs (8, 13) pour ajuster la forme de la plaque de pression (7),
fonctionnement du/des actionneur(s) (8, 13) pour appuyer la plaque de pression (7) contre l'élément de vitre (4),
injection d'un polymère dans la cavité du moule (1) pour former l'élément de cadre (5).

12. Procédé selon la revendication 11, comprenant en outre la mesure de la pression appliquée par les actionneurs respectifs pendant le déplacement des actionneurs pour porter les pressions mesurées respectives à une valeur seuil prédéterminée respective.

13. Procédé selon la revendication 12, dans lequel les valeurs seuils sont basées sur des données de référence relatives à la résistance intrinsèque à la déformation de la plaque de pression (7).
